# EUROPEAN PATENT APPLICATION

(11) **EP 3 051 410 A1**
(43) Date of publication of application: **03.08.2016**
(21) Application number: 15153493.0
(22) Date of filing: 02.02.2015
(51) Int. Cl.: G06F 3/14, H02J 7/02

(54) **An apparatus and associated methods for provision of wireless power**

(71) Applicant: Nokia Technologies OY, 02610 Espoo (FI)
(72) Inventor: Mate, Sujeet Shyamsundar, 33720 Tampere (FI); Leppanen, Jussi, 33580 Tampere (FI); Babahajiani, Pouria, 33720 Tampere (FI); Fu, Junsheng, 33720 Tampere (FI)
(74) Representative: Potter Clarkson LLP

(57) **Abstract**

An apparatus comprising at least one processor; and at least one memory including computer program code, the at least one memory and the computer program code configured to, with the at least one processor, cause the apparatus to perform at least the following: based on the provision of wireless power to a portable electronic device, provide for display of an identifying graphic containing information to identify the portable electronic device wirelessly receiving power to a user.

## Description

### Technical Field

The present disclosure relates to the field of the provision of wireless power, associated methods, computer programs and apparatus. Certain disclosed aspects/examples relate to portable electronic devices, in particular, so-called hand-portable electronic devices which may be hand-held in use (although they may be placed in a cradle in use). Such hand-portable electronic devices include mobile telephones, so-called Personal Digital Assistants (PDAs), smartphones and other smart devices, and tablet PCs.

The portable electronic devices/apparatus according to one or more disclosed aspects/embodiments may provide one or more audio/text/video communication functions (e.g. tele-communication, video-communication, and/or text transmission (Short Message Service (SMS)/Multimedia Message Service (MMS)/e-mailing) functions), interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture functions (e.g. using a (e.g. in-built) digital camera), and gaming functions.

### Background

A plurality of methods of powering and/or charging a portable electronic device are available. Typically a conductor or wire is used to transfer electrical power from a power source to the portable electronic device for charging a battery of the portable electronic device. Inductive charging is a wireless charging technology in which coils in the power source and portable electronic device form an inductive coupling by way of a magnetic field, which replaces the need for a wire. The use of focussed or directional electromagnetic fields have potential to extend the range between a portable electronic device and a power source while being powered or charged.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first example aspect there is provided an apparatus comprising at least one processor and at least one memory including computer program code, the at least one memory and the computer program code configured to, with the at least one processor, cause the apparatus to perform at least the following:
based on the provision of wireless power to a portable electronic device, provide for display of an identifying graphic distinct from a display screen of the portable electronic device, the identifying graphic containing information to identify the portable electronic device wirelessly receiving power to a user.

Optionally, the identifying graphic is selected from at least;
i) an image (live or still) of the portable electronic device;
ii) an image representative of a make/model of the portable electronic device;
iii) an image arranged to highlight the portable electronic device;
iv) a directional indicator arranged to point towards the portable electronic device; and
v) a line arranged to virtually connect a wireless power providing device and the portable electronic device to which it provides power as viewed by a user.

Optionally, the identifying graphic is provided for display by a wireless power providing device configured to wirelessly provide the portable electronic device with power.

Optionally, the apparatus provides for display of the identifying graphic only while power is supplied to said portable electronic device. The apparatus may provide for display of a user selectable graphic corresponding to a portable electronic device that is identified as able to receive power wirelessly and is in range of a wireless power providing device. User selection of the user selectable graphic may initiate the provision of wireless power to the portable electronic device corresponding to the user selectable graphic.

Optionally, the identifying graphic is provided for holographic display. Optionally, the identifying graphic is provided for augmented reality display. Optionally the identifying graphic is provided for projection by a projector. Optionally, the identifying graphic is provided for display on a display of a wireless power providing device.

Optionally, prior to the provision of wireless power to the portable electronic device, provide for the display of a wireless power availability graphic indicative of the availability of wirelessly transmitted power from a wireless power providing device. The wireless power availability graphic may be provided for augmented reality display or holographic display or for display by projection or for display on a display of the wireless power providing device or a combination thereof.

Optionally, based on virtual user actuation of the wireless power availability graphic to identify a portable electronic device, provide for initiation of the wireless supply of power to the portable electronic device. The user actuation may be provided virtually in an augmented reality environment. The wireless power availability graphic may comprise a depiction of at least a part of a charging/power cable. Alternatively, the wireless power availability graphic may comprise a different graphic or text, such as an instruction to the user, for example "Drag me to charge".

Optionally, the user actuation of the wireless power availability graphic comprises virtually dragging the wireless power availability graphic to or within a predetermined distance of the portable electronic device or its representation on a user interface. Thus, in augmented reality the wireless power availability graphic may be manipulated by virtually "moving" it to (or within a predetermined distance of) the portable electronic device to be powered/charged. The apparatus may be configured to automatically detect when the wireless power availability graphic has been dragged over, or to within a predetermined distance from, a compatible wirelessly powerable or chargeable device and wireless power may be provided or scheduled to be provided automatically. Alternatively, the user may be required to provide a further gesture to provide for an instruction to provide for the initiation of the wireless supply of power to the portable electronic device.

The wireless power availability graphic may be modified on user actuation. For example, the wireless power availability graphic may change from a text instruction to a depiction of a charging plug when virtually "grabbed" by a user.

Optionally, based on the virtually dragging of the wireless power availability graphic by the user, provide for display of a line extending between the wireless power providing device and the wireless power availability graphic. The line may be configured to depict a virtual power/charging cable.

Optionally, based on an indication of the range over which wireless power can be provided from a wireless power providing device, provide for the display of a range indicating graphic for showing a user the operating range of the wireless power providing device. Optionally, in response to virtual user actuation of the wireless power availability graphic, said actuation comprising virtually dragging the wireless power availability graphic away from the wireless power providing device beyond a predetermined distance, provide for display of an additional range limit graphic or modify the display of the wireless power availability graphic to indicate to a user that power cannot be provided beyond the predetermined distance.

The range indicating graphic may comprise a change in the wireless power availability graphic, such as changing colour when the operating range is reached. Alternatively, if a line extending between the wireless power providing device and the wireless power availability graphic is provided, the line may be prevented from extending beyond the operational range in augmented reality. The range indicating graphic may be an animation to the wireless power availability graphic. The wireless power providing device may provide the information for determining the range to display, which may be predetermined or based on measurements. For example, the wireless power providing device may use sensors or analysis of environmental effects on the wireless powering field/beam to determine the range to be represented by the range indicating graphic. For example, objects that may interfere with or impede the wireless power beam/field may be identified to calculate the range.

Optionally, the identifying graphic may be provided in response to receipt of information identifying the portable electronic device and/or identifying the physical location of the portable electronic device which is receiving wireless power and provides for display of the identifying graphic in response to said information. This information may be provided by a wireless power providing device, which supplies the portable electronic device with power, or the portable electronic device. Alternatively, the identifying graphic may be provided in response to determination by the apparatus of the portable electronic device receiving power. The wireless power providing device may be configured to determine the identity of the portable electronic device wirelessly receiving power and the apparatus may be configured to receive that information and provide for display of the identifying graphic. The apparatus may comprise an augmented reality (AR) device, such as augmented reality glasses, near eye display, smart glasses, head mounted display and/or the like. The AR device may thus overlay the identifying graphic over the user's view of the portable electronic device. The apparatus may comprise the wireless power providing device, which may include a display or projector for providing the identifying graphic.

Optionally, the apparatus is one or more of: a portable electronic device, a wireless power providing device, a laptop computer, a mobile phone, a Smartphone, a tablet computer, a personal digital assistant, a digital camera, a smartwatch, smart eyewear, a pen based computer, a non-portable electronic device, a desktop computer, a monitor, a household appliance, a smart TV, a server, or a module/circuitry for one or more of the same. The apparatus for providing for display of the identifying graphic, in whole or in part, may comprise one or more of; the portable electronic device, the wireless power provider device or the augmented reality device.

In a further aspect there is provided a method, the method comprising, based on the provision of wireless power to a portable electronic device, providing for display of an identifying graphic distinct from a display screen of the portable electronic device, the identifying graphic containing information to identify the portable electronic device wirelessly receiving power to a user.

Optionally, the identifying graphic is selected from at least;
i) an image (live or still) of the portable electronic device;
ii) an image representative of a make/model of the portable electronic device;
iii) an image arranged to highlight the portable electronic device;
iv) a directional indicator arranged to point towards the portable electronic device; and
v) a line arranged to virtually connect a wireless power providing device and the portable electronic device to which it provides power as viewed by a user.

Optionally, the method includes providing for display of the identifying graphic by a wireless power providing device configured to wirelessly provide the portable electronic device with power.

Optionally, the method comprises providing for display of the identifying graphic while power is supplied to said portable electronic device. The method may include providing for display of a user selectable graphic corresponding to a portable electronic device that is identified as able to receive power wirelessly and is in range of a wireless power providing device. User selection of the user selectable graphic may initiate the provision of wireless power to the portable electronic device corresponding to the user selectable graphic. The user selection may be provided via augmented reality apparatus.

Optionally, the method comprises providing the identifying graphic for holographic display. Optionally, the method comprises providing the identifying graphic for augmented reality display. Optionally the method comprises providing the identifying graphic for projection by a projector.

Optionally, the method comprises, prior to the provision of wireless power to the portable electronic device, providing for the display of a wireless power availability graphic indicative of the availability of wirelessly transmitted power from a wireless power providing device. The wireless power availability graphic may be provided for augmented reality or holographic display. The wireless power availability graphic may be provided for display in association with a wireless power providing device, such as on, above, or adjacent to the device.

Optionally, based on virtual user actuation of the wireless power availability graphic to identify a portable electronic device, the method comprises providing for initiation of the wireless supply of power to the portable electronic device. The user actuation may be provided virtually in an augmented reality environment. The wireless power availability graphic may comprise a depiction of at least a part of a charging/power cable. Alternatively, the wireless power availability graphic may comprise a different graphic or text, such as an instruction to the user, for example "Drag me to power/charge". This indicates that if a user drags the graphic to visually align with the portable electronic device, the wireless power providing device may initiate the supply of power to the device.

Optionally, the user actuation of the wireless power availability graphic comprises virtually dragging the wireless power availability graphic to the portable electronic device or its representation on a user interface. Thus, in augmented reality the wireless power availability graphic may be manipulated by virtually "moving" it to the portable electronic device to be powered/charged. The apparatus may be configured to automatically detect when the wireless power availability graphic has been dragged over, or within a predetermined distance of, a compatible wirelessly powerable/chargeable device or the user may be required to provide a further gesture to provide for the initiation of the wireless supply of power to the portable electronic device.

The method may comprise modifying the wireless power availability graphic upon user actuation. For example, the wireless power availability graphic may change from a text instruction to a depiction of a charging plug when virtually "grabbed" by a user.

Optionally, based on the virtually dragging of the wireless power availability graphic by the user, the method may comprise providing for display of a line extending between the wireless power providing device and the wireless power availability graphic. The line may be configured to depict a virtual power/charging cable.

Optionally, based on an indication of the range over which wireless power can be provided from a wireless power providing device, the method may comprise providing for the display of a range indicating graphic for showing a user the operating range of the wireless power providing device. Optionally, in response to virtual user actuation of the wireless power availability graphic, said actuation comprising virtually dragging the wireless power availability graphic away from the wireless power providing device beyond a predetermined distance, the method may comprise providing for display of an additional range limit graphic or modify the display of the wireless power availability graphic to indicate to a user that power cannot be provided beyond the predetermined distance.

The range indicating graphic may comprise a change in the wireless power availability graphic, such as changing colour when the operating range is reached. Alternatively, if a line extending between the wireless power providing device and the wireless power availability graphic is provided, the line may be prevented from extending beyond the operational range in augmented reality. Thus, the range indicating graphic may be an animation to the wireless power availability graphic. The wireless power providing device may provide the information for determining the range to display, which may be predetermined or based on measurements. For example, the wireless power providing device may use sensors or analysis of environmental effects on the wireless power field/beam to determine the range to be represented by the range indicating graphic. For example, objects that may interfere with or impede the wireless power beam/field may be identified to calculate the range.

Optionally, the method comprises providing the identifying graphic in response to receipt of information identifying the portable electronic device or the physical location of the portable electronic device which is receiving wireless power and provides for display of the identifying graphic in response to said information. This information may be provided by a wireless power providing device, which supplies the portable electronic device with power, or the portable electronic device. Alternatively, the method may comprise providing the identifying graphic in response to determination of the portable electronic device receiving power. The wireless power providing device may be configured to determine the identity of the portable electronic device wirelessly receiving power and the method may include receiving that information and providing for display of the identifying graphic.

Throughout the present specification, descriptors relating to relative orientation and position, such as "top", "bottom", "upper", "lower", "above" and "below", as well as any adjective and adverb derivatives thereof, are used in the sense of the orientation of the apparatus as presented in the drawings. However, such descriptors are not intended to be in any way limiting to an intended use of the described or claimed invention.

The steps of any method disclosed herein do not have to be performed in the exact order disclosed, unless explicitly stated or understood by the skilled person.

In a further aspect there is provided a computer readable medium comprising computer program code stored thereon, the computer readable medium and computer program code being configured to, when run on at least one processor, perform at least the following: based on the provision of wireless power to a portable electronic device, provide for display of an identifying graphic distinct from a display screen of the portable electronic device, the identifying graphic containing information to identify the portable electronic device wirelessly receiving power to a user.

Corresponding computer programs for implementing one or more steps of the methods disclosed herein are also within the present disclosure and are encompassed by one or more of the described example embodiments.

One or more of the computer programs may, when run on a computer, cause the computer to configure any apparatus, including a battery, circuit, controller, or device disclosed herein or perform any method disclosed herein. One or more of the computer programs may be software implementations, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

One or more of the computer programs may be provided on a computer readable medium, which may be a physical computer readable medium such as a disc or a memory device, or may be embodied as a transient signal. Such a transient signal may be a network download, including an internet download.

In a further aspect there is provided an apparatus, the apparatus comprising means for providing for display, based on the provision of wireless power to a portable electronic device, an identifying graphic distinct from a display screen of the portable electronic device, the identifying graphic containing information to identify the portable electronic device wirelessly receiving power to a user.

The present disclosure includes one or more corresponding aspects, examples or features in isolation or in various combinations whether or not specifically stated (including claimed) in that combination or in isolation. Corresponding means and corresponding functional units (e.g., function enabler, object creator, displayer etc) for performing one or more of the discussed functions are also within the present disclosure.

The above summary is intended to be merely exemplary and non-limiting.

### Brief Description of the Figures

A description is now given, by way of example only, with reference to the accompanying drawings, in which:
figure 1 illustrates an example apparatus embodiment comprising a number of electronic components, including memory and a processor, according to one embodiment of the present disclosure;
figure 2 illustrates an example apparatus embodiment comprising a number of electronic components, including memory, a processor and a communication unit, according to another embodiment of the present disclosure;
figure 3 illustrates an example apparatus embodiment comprising a number of electronic components, including memory and a processor, according to another embodiment of the present disclosure;
figure 4 illustrate an example portable electronic device, a wireless power providing device and an augmented reality device according to another embodiment of the present disclosure;
figures 5-7 illustrate a desk scene and a corresponding view through an eyepiece of the augmented reality device;;
figures 8-11 illustrate a desk scene as viewed through an augmented reality device:
figures 12 and 13 illustrate a desk scene and use of a wireless power providing device having a holographic display and optional projector;
figures 14a and 14b illustrate an electronic device in communication with a remote server and a cloud according to embodiments of the present disclosure;
figure 15 illustrates a flowchart according to a method of the present disclosure; and
figure 16 illustrates schematically a computer readable medium providing a program.

### Description of Example Aspects

Wireless power transfer is the transfer of electrical power without the use of wires or conductors. Electric and/or magnetic fields or electromagnetic radiation may be used to wirelessly transmit power from a wireless power providing device to a portable electronic device, such as a mobile telephone. The power received by the portable electronic device may be used to power the device and/or charge a battery of the portable electronic device.

Inductive charging utilises an electromagnetic field to transfer electrical energy between an inductive charging pad and the portable electronic device. The charging pad typically includes a first coil configured to generate the electromagnetic field. The portable electronic device typically has a second coil to receive the electromagnetic field, which may be used to charge a battery of the portable electronic device. Thus, the electrical energy is transferred by an inductive coupling between the two coils.

Inductive charging typically requires the portable electronic device to rest on the charging pad while receiving electrical power. Thus, while no wires between the charging pad and the portable electronic device are required, the portable electronic device needs to be positioned on the inductive charging pad for efficient transfer of electrical energy, such as within 1-2 centimetres.

Wireless power transfer that operates over greater distances has been developed using techniques such as resonant inductive coupling. Another technique with greater range is directional wireless power transfer in which a directional electromagnetic field is generated and actively pointed at the portable electronic device to be powered. This may be achieved by an array of coils. The array may be steerable such that magnetic field can be actively pointed at a target. In other examples, the field or beam may be fixed in an anisotropic field strength pattern, such that an electromagnetic node or beam extends predominately in one direction. Accordingly, a directional wireless power transfer device may be able to detect a wirelessly powerable or wirelessly chargeable device and focus its magnetic field on the device. The effective range of a directional wireless power transfer device may be up to or at least 10cm, 20cm, 30cm, 40cm, 50cm, 1 metre or more. Beams of electromagnetic radiation may also be used to provide a directional wireless power transfer.

When a portable electronic device supports the receipt of wireless power (such as by being wirelessly chargeable or powerable by an electromagnetic field) identifying when and which device is receiving power is problematic. Thus, although inductive charging that utilises a charging pad is wireless, a user can easily see that a device is (potentially) being powered because it is positioned on the charging pad. However, it is more difficult when longer range wireless power transfer is utilised.

An advantage of the embodiments discussed herein is the provision of an identifying graphic which provides the user with the identity of a portable electronic device being powered/charged without having to look at a display of the portable electronic device because the graphic identifies the device to a user by virtue of its form and/or position. The display of the identifying graphic is thus distinct from any icon or graphic displayed on a display or power light of the portable electronic device wirelessly receiving power. Thus, the identifying graphic may be provided via augmented reality or via a holographic display or via a projector. The identifying graphic may point to or highlight the portable electronic device. The identifying graphic may represent a connection between a wireless power providing device and the portable electronic device. The identifying graphic may contain information by virtue of its shape and/or position or by including identifying text and/or an identifying picture to enable a user to see which and/or when a portable electronic device is wirelessly receiving power. This is advantageous when used with directional wireless power providing devices, where the portable electronic device receiving power may not be easily identifiable.

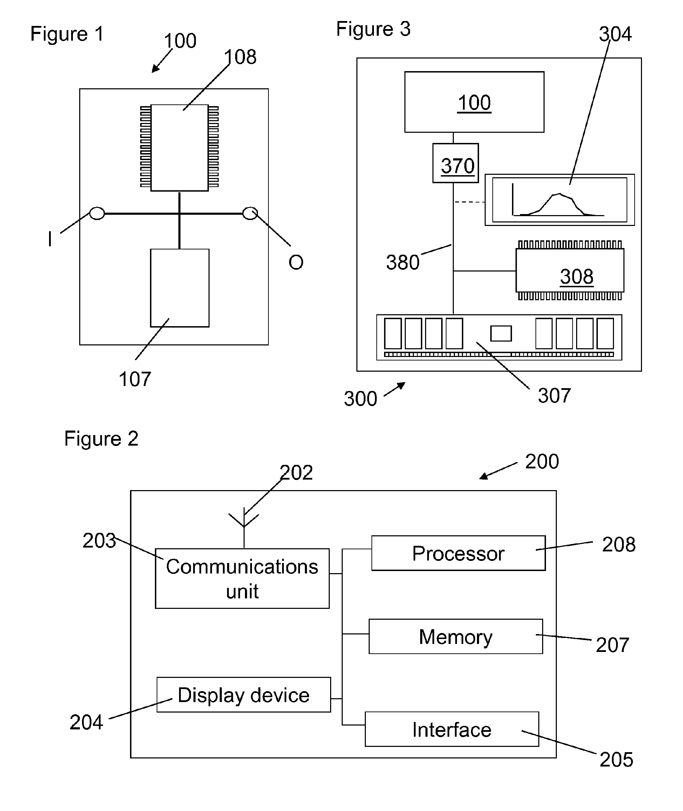

Figure 1 shows an apparatus 100 comprising memory 107, a processor 108, input I and output O. In this embodiment only one processor and one memory are shown but it will be appreciated that other embodiments may utilise more than one processor and/or more than one memory (e.g. same or different processor/memory types).

In this embodiment the apparatus 100 is an Application Specific Integrated Circuit (ASIC) for a portable electronic device with a touch sensitive display. In other embodiments the apparatus 100 can be a module for such a device, or may be the device itself, wherein the processor 108 is a general purpose CPU of the device and the memory 107 is general purpose memory comprised by the device.

The input I allows for receipt of signalling to the apparatus 100 from further components, such as components of a portable electronic device (like a touch-sensitive or hover-sensitive display) or the like. The output O allows for onward provision of signalling from within the apparatus 100 to further components such as a display screen, speaker, or vibration module. In this embodiment the input I and output O are part of a connection bus that allows for connection of the apparatus 100 to further components.

The processor 108 is a general purpose processor dedicated to executing/processing information received via the input I in accordance with instructions stored in the form of computer program code on the memory 107. The output signalling generated by such operations from the processor 108 is provided onwards to further components via the output O.

The memory 107 (not necessarily a single memory unit) is a computer readable medium (solid state memory in this example, but may be other types of memory such as a hard drive, ROM, RAM, Flash or the like) that stores computer program code. This computer program code stores instructions that are executable by the processor 108, when the program code is run on the processor 108. The internal connections between the memory 107 and the processor 108 can be understood to, in one or more example embodiments, provide an active coupling between the processor 108 and the memory 107 to allow the processor 108 to access the computer program code stored on the memory 107.

In this example the input I, output O, processor 108 and memory 107 are all electrically connected to one another internally to allow for electrical communication between the respective components I, O, 107, 108. In this example the components are all located proximate to one another so as to be formed together as an ASIC, in other words, so as to be integrated together as a single chip/circuit that can be installed into an electronic device. In other examples one or more or all of the components may be located separately from one another.

Figure 2 depicts an apparatus 200 of a further example embodiment, such as a mobile phone. In other example embodiments, the apparatus 200 may comprise a module for a mobile phone (or PDA or audio/video player), and may just comprise a suitably configured memory 207 and processor 208.

The example embodiment of figure 2 comprises a display device 204 such as, for example, a liquid crystal display (LCD), e-Ink or touch-screen user interface. The apparatus 200 of figure 2 is configured such that it may receive, include, and/or otherwise access data. For example, this example embodiment 200 comprises a communications unit 203, such as a receiver, transmitter, and/or transceiver, in communication with an antenna 202 for connecting to a wireless network and/or a port (not shown) for accepting a physical connection to a network, such that data may be received via one or more types of networks. This example embodiment comprises a memory 207 that stores data, possibly after being received via antenna 202 or port or after being generated at the user interface 205. The processor 208 may receive data from the user interface 205, from the memory 207, or from the communication unit 203. It will be appreciated that, in certain example embodiments, the display device 204 may incorporate the user interface 205. Regardless of the origin of the data, these data may be outputted to a user of apparatus 200 via the display device 204, and/or any other output devices provided with apparatus. The processor 208 may also store the data for later use in the memory 207. The memory 207 may store computer program code and/or applications which may be used to instruct/enable the processor 208 to perform functions (e.g. read, write, delete, edit or process data).

Figure 3 depicts a further example embodiment of an electronic device 300, such as augmented reality glasses, a holographic display, a projector, a tablet personal computer, a portable electronic device, a portable telecommunications device, a server or a module for such a device, the device comprising the apparatus 100 of figure 1. The apparatus 100 can be provided as a module for device 300, or even as a processor/memory for the device 300 or a processor/memory for a module for such a device 300. The device 300 comprises a processor 308 and a storage medium 307, which are connected (e.g. electrically and/or wirelessly) by a data bus 380. This data bus 380 can provide an active coupling between the processor 308 and the storage medium 307 to allow the processor 308 to access the computer program code. It will be appreciated that the components (e.g. memory, processor) of the device/apparatus may be linked via cloud computing architecture. For example, the storage device may be a remote server accessed via the internet by the processor.

The apparatus 100 in figure 3 is connected (e.g. electrically and/or wirelessly) to an input/output interface 370 that receives the output from the apparatus 100 and transmits this to the device 300 via data bus 380. Interface 370 can be connected via the data bus 380 to a display 304 (touch-sensitive or otherwise) that provides information from the apparatus 100 to a user. Display 304 can be part of the device 300 or can be separate. The device 300 also comprises a processor 308 configured for general control of the apparatus 100 as well as the device 300 by providing signalling to, and receiving signalling from, other device components to manage their operation.

The storage medium 307 is configured to store computer code configured to perform, control or enable the operation of the apparatus 100. The storage medium 307 may be configured to store settings for the other device components. The processor 308 may access the storage medium 307 to retrieve the component settings in order to manage the operation of the other device components. The storage medium 307 may be a temporary storage medium such as a volatile random access memory. The storage medium 307 may also be a permanent storage medium such as a hard disk drive, a flash memory, a remote server (such as cloud storage) or a non-volatile random access memory. The storage medium 307 could be composed of different combinations of the same or different memory types.

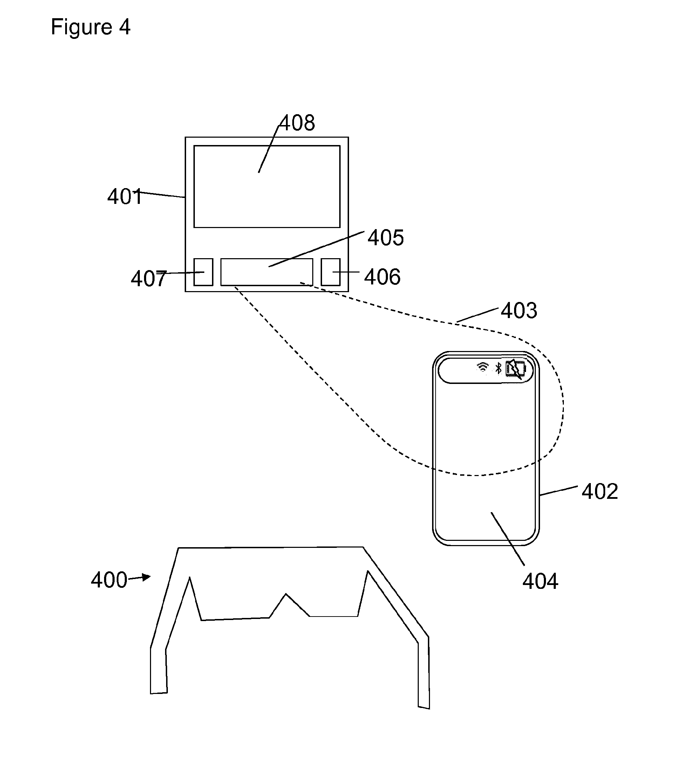

Figures 4 illustrates an example of an apparatus which comprises an augmented reality device, such as glasses 400, in use. The device 400 in this example may include the apparatus integrated with the AR glasses 400, or the apparatus may be provided in a different device in communication with the AR glasses. It will be appreciated that AR glasses may alternatively comprise a near eye display, smart glasses, head mounted display and/or the like. Figure 4 also shows a wireless power providing device 401 and a portable electronic device 402. The wireless power providing device 401 is shown providing power to the portable electronic device 402 by way of a directional and, in this embodiment, actively steerable magnetic field, which is represented by dotted line 403. The directional magnetic field is focussed on the portable electronic device 402 to provide power thereto, such as to charge a battery of the portable electronic device 402. The portable electronic device 402 is thus configured to use the received energy to power its internal circuitry and/or charge a battery (such as an electrochemical battery or capacitor). The portable electronic device may therefore have a receiving element, such as coils, configured to receive the energy from the directional magnetic field and act as a power supply for other electronic components of the portable electronic device and/or as a battery charger. The portable electronic device 402, in this embodiment, is a mobile telecommunications device having an internal battery (not visible) and a display screen 404.

The wireless power providing device 401 includes a magnetic coil array 405. The array 405 may comprise a plurality of coils that operate together to generate the directional magnetic field 403. The magnetic field may have an angular width of less than 180, 160, 140, 120, 90, 80, 70, 60, 50, 40, 30, 20, 10 or 5°. The device 401 may also include a camera 406 for identifying chargeable portable electronic devices. The device 401 may also include a communication element 407, such as Bluetooth, which can be used to communicate with portable electronic devices that have wireless power receiving/charging capabilities. Further, the wireless power providing device 401 includes a controller 408 which may be configured to control the magnetic coil array 405 and/or receive data from the camera 406 and/or communication element 407, which may be used to determine where to focus the magnetic field 403.

In general, the wireless power providing device 401 may include a power providing field or beam generator that may be actively steerable and a location determination element for determining the location of portable electronic devices that are able to receive wireless power in order to direct the directional power providing field or beam. The location determination element may use information transmitted by the portable electronic device to determine its location.

It will be appreciated that the magnetic coil array 405 may be replaced with any other directional wireless power providing technology such as an electromagnetic radiation beam generating element. Further, the controller 408 may be part of the wireless power providing device 401 or it may be part of an external apparatus or distributed over several devices.

In this embodiment, the controller 408 may use the communication element to determine the presence and location of portable electronic devices that support directional wireless power/charging. This may be achieved by processing signals sent to and received from portable electronic devices. A directional antenna may be used. Thus, a data communication link may be used to identify the presence of a compatible device and analysis of signal power may be used to estimate the physical position of the device. Kotanen, A et al, "Experiments on local positioning with Bluetooth", Information Technology: Coding and Computing, 2003. Proceedings ITCC 2003, Pages 297-303 provides one example of a technique of locating devices using Bluetooth. It will be appreciated by the skilled man that numerous methods for identifying the locations of portable electronic devices exist and the use of the communication element 407 (and possibly the camera 406) is one example. For example, the images from the camera may be used to identify wireless power compatible devices. Alternatively, multiple communication elements 407 (using the same or different protocols such as Wi-Fi, Bluetooth, and Near Field Communication etc.) may be used. Further, the portable electronic device 402 may be configured to identify its position (which may be an absolute position or relative to the wireless power providing device) and report the position to the wireless power providing device 401 and/or augmented reality device 400. As an example, the portable electronic device 402 could incorporate a global positioning system (GPS) chip, or use GPS, or Wi-Fi location technique, or another indoor positioning technique to acquire its location and report this to the wireless power providing device 401 and/or augmented reality device 400.

In use, the augmented reality device or glasses 400 are configured, possibly in combination with the wireless power providing device 401, and based on the provision of wireless power to the portable electronic device 402 by the wireless power providing device 401, to display an identifying graphic containing information to identify the portable electronic device 402 wirelessly receiving power to a user. Thus, a user of the augmented reality device 400 can easily visualize the "power flow connection" between the directional wireless power providing device 401 and the portable electronic device 402. Thus, given that the wireless power providing device 401 and the portable electronic device 402 may be separated by more than 10 cm, for example, the identifying graphic provides a convenient way for the user to see which devices are being provided with power, without having to refer to the display 404 of the portable electronic device 402.

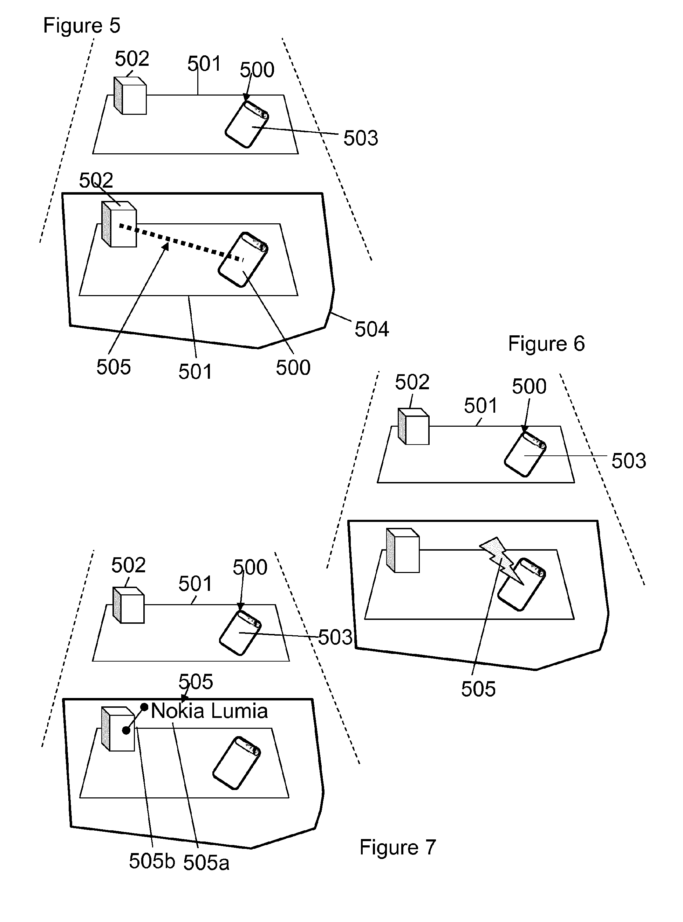

Figure 5 shows a first example of the identifying graphic. In figure 7 a scene is shown of a portable electronic device 500 on a desk 501 having a directional wireless power providing device 502 thereon. The directional wireless power providing device 500 is wirelessly providing the portable electronic device 500 with power for charging its battery (not shown) by way of a focussed magnetic field. Of course, this magnetic field is invisible to the user and therefore they have no way of knowing that the portable electronic device 500 is receiving power unless they refer to the display 503 of the portable electronic device which may show a charging icon, as will be known to those skilled in the art. However, Figure 5 also shows the view through an eyepiece 504 of an augmented reality device. The user may thus view the portable electronic device 500, desk 501 and directional wireless power providing device 502. The augmented reality view provides the identifying graphic 505, which comprises a line or "virtual power cable" extending between the portable electronic device 500 and the directional wireless power providing device 502. By virtue of the position of the identifying graphic appearing to connect the portable electronic device 500 and the directional wireless power providing device 502, the user can appreciate from the identifying graphic 505 alone that the portable electronic device 500 is receiving power.

The identifying graphic may be displayed continuously while the portable electronic device 500 is receiving power from the directional wireless power providing device 502. Alternatively, it may be displayed intermittently while power transfer is ongoing. Alternatively it may be displayed for a predetermined time period, such as for a limited time when wireless power transfer is initiated. Alternatively, it may be displayed when the portable electronic device 500 is viewable through the eyepiece 504 of an augmented reality device, e.g. when a user wearing near eye display looks at the portable electronic device 500 and keeps the near eye display pointed toward the portable electronic device 500 and/or the wireless power providing device 502. It will be appreciated that the augmented reality device may comprise augmented reality glasses, near eye display, smart glasses, head mounted display and/or the like.

Figure 6 shows a further embodiment of the identifying graphic 505 displayed by the augmented reality device in the eyepiece 504. In this embodiment, the identifying graphic comprises a lightning bolt icon that is positioned to overlay the portable electronic device 500 to thereby identify the device 500 to the user as receiving power from the wireless power providing device 502. It will be appreciated that the lightning bolt icon points towards the portable electronic device and that, as an alternative or an addition, an arrow or pointer and/or the like could comprise the identifying graphic to identify the portable electronic device 500 to the user in the augmented reality view.

Figure 7 shows a further embodiment of the identifying graphic 505 displayed by the augmented reality device in the eye piece 504. In this embodiment, the identifying graphic comprises a text identifier 505a of the portable electronic device 500 which is wirelessly receiving power in the augmented reality view. In this embodiment, the text 505a is linked to the wireless power providing device 502 by a line 505b positioned to overlay the wireless power providing device 502. The text 505a may be selected to be unique amongst the portable electronic devices receiving power from the wireless power providing device 502. The text 505a may be selected to be unique amongst the portable electronic devices that are present within a predetermined area surrounding the wireless power providing device 502, which may or may not be wirelessly receiving power. The text 505a may, for example, be the configured Bluetooth name of the portable electronic device 500. Alternatively, or in addition, an image of the portable electronic device may be displayed in the augmented reality view. The image may be a stock image of the portable electronic device derived from a database using data acquired from the device 500 regarding the make and/or model. The image may be a still or live image taken by a camera, such as camera 406 of the wireless power providing device.

It will be appreciated that in the examples given herein, the wireless power providing device may provide for the display of the identifying graphic and may send instructions to the augmented reality device for displaying the identifying graphic to a user. Alternatively, the portable electronic device or augmented reality device may provide for the display of the identifying graphic or a combination selected from the portable electronic device, augmented reality device or wireless power providing device or a further apparatus. Thus, determination of the location of portable electronic device and wireless power providing device relative to the augmented reality device may be determined by any the devices or a further apparatus.

Further, while augmented reality glasses 400 or an eyepiece 504 is shown, the augmented reality device may comprise any display that is capable of overlaying graphics over a user viewable scene or live image of the user viewable scene. For example, a near eye display, smart glasses, head mounted display and/or the like.

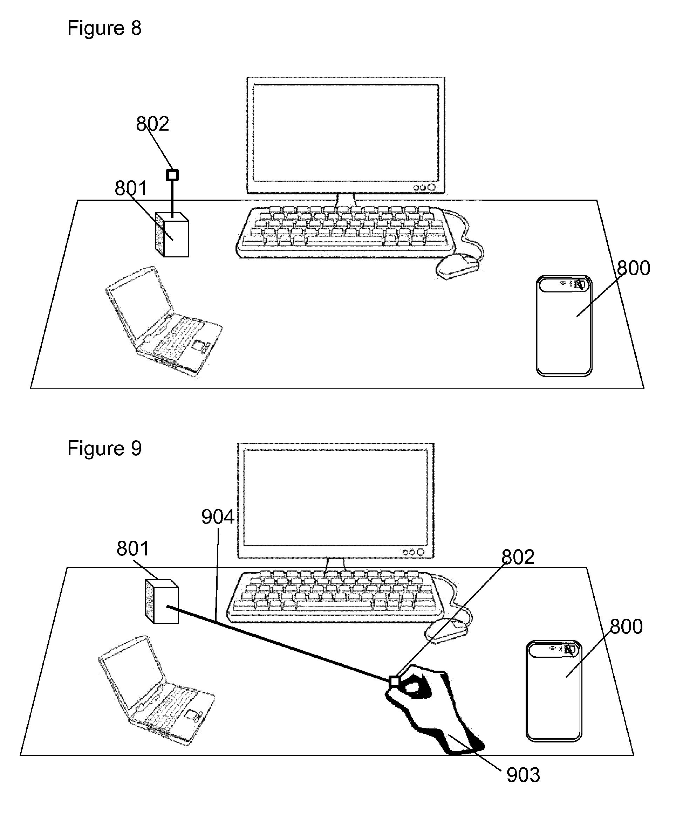

Figures 8 to 11 show the identifying graphic and further graphics that may be displayed to the user via augmented reality to provide an advantageous wireless power providing user interface.

Figure 8 shows a scene of a user's desk through an augmented reality device, such as augmented reality device 400, 504. A portable electronic device 800 is shown on the user's desk that has wireless power receiving capabilities. A directional wireless power providing device 801 is also present on the desk. Prior to the provision of wireless power to the portable electronic device 800, a wireless power availability graphic 802 is displayed indicative of the availability of wirelessly transmitted power from the wireless power providing device 801. Thus, in this example, a user is shown, in augmented reality, a wireless power availability graphic 802 associated with the directional wireless power providing device 801. The wireless power availability graphic 802 may be positioned to overlie the wireless power providing device 801 or be "virtually" positioned adjacent thereto.

The wireless power providing device 801 may only be displayed when the wireless power providing device 801 has capacity to provide wireless power to a portable electronic device. In this example, the wireless power availability graphic 802 comprises an image of a connector of a charging cable. Provision of this skeuomorphic wireless power availability graphic 802 is indicative of the availability of wirelessly transmitted power. It will be appreciated that other graphical forms of the wireless power availability graphic 802 may be used whether skeuomorphic or not. For example, text could be provided in the augmented reality view that is associated with the wireless power providing device 801.

In one example, the wireless power availability graphic 802 can be virtually actuated or manipulated to initiate the supply of wireless power. In particular, the augmented reality device may provide for user actuation or "manipulation" of the wireless power availability graphic 802 in the virtual augmented environment, as shown in Figure 9. Figure 9 shows the user's hand 903 which has virtually grabbed the wireless power availability graphic 802 and has started moving it around in the virtual augmented environment. In particular, the augmented reality device provides for user manipulation of the wireless power availability graphic 802 by virtually dragging it. A grabbing gesture may be used to "pick up" the wireless power availability graphic 802, as will be appreciated by those skilled in the art. The augmented reality device may thus determine the position of a user's hand relative to the wireless power availability graphic 802. On detecting a "pick up" gesture, the augmented reality device may move, animate or manipulate the wireless power availability graphic 802 in accordance with movements of the user's hand. It will be appreciated that on initial user manipulation, the wireless power availability graphic 802 may be replaced with a different graphic to provide feedback to the user that the wireless power availability graphic 802 has been "picked up". For example, if the wireless power availability graphic 802 comprises text, it may change to an image of a connector on user manipulation. Also, while a user's hand is shown manipulating the wireless power availability graphic 802, the augmented reality device may be configured to detect a stylus, finger or other object.

Figure 9 shows the augmented reality device displaying a further graphic 904 on virtual user manipulation of the wireless power availability graphic 802. In particular, based on the virtual dragging of the wireless power availability graphic 802 by the user, a line graphic 904 comprising the further graphic extending between the wireless power providing device 801 and the wireless power availability graphic 802 is displayed. This provides feedback to the user that a virtual charging cable is extending from the wireless power providing device 801. It will be appreciated that the further graphic 904 may take other forms.

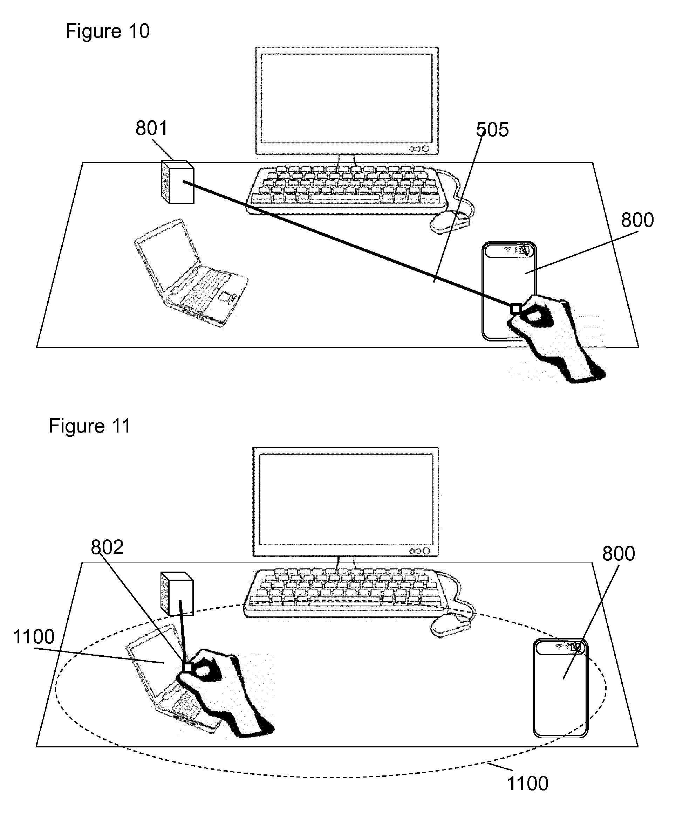

User manipulation of the wireless power availability graphic 802 may be used as input for the wireless power providing device 801 to identify a portable electronic device so that wireless power can be supplied thereto. Figure 10 shows the user's hand having moved the wireless power availability graphic 802 such that it aligns with the portable electronic device 800 in the augmented reality view. The user may gesture to "let go" of the wireless power availability graphic 802, such as by opening their hand from a grasping position. The augmented reality device may indicate to the wireless power providing device 801 the location the user provided as input (in this example provided by "letting go" of the wireless power availability graphic 802). The wireless power providing device 801 may then control its power providing field or beam generator to focus the wirelessly transmitted power on the location provided as input. The wireless power providing device may correlate the input location with its own determined data on where wirelessly powerable portable electronic devices are located. Once the supply of wireless power is initiated, the identifying graphic 505 may be displayed as described above rather than the wireless power availability graphic 802. In this example, the wireless power availability graphic 802 and its associated line 904 is similar to the identifying graphic 505, when positioned over the portable electronic device.

In a further example, the augmented reality device may provide for termination of the wireless supply of power by further user manipulation of the identifying graphic 505. Figure 11 shows the user having virtually moved the identifying graphic 505. On user manipulation, the identifying graphic 505 may change back to the wireless power availability graphic 802, which can be virtually placed to identify a different portable electronic device, such as portable electronic device 1100. Alternatively, user manipulation of the identifying graphic 505 to a specific place, such as over the wireless power providing device 801, may provide for termination of the supply of wireless power to the portable electronic device 800. In other examples, the wireless power providing device may be able to power/charge multiple devices simultaneously and therefore display of a power availability graphic may be provided accordingly.

In a further example, the wireless power providing device 801 may have an effective operating range. The augmented reality device may display a range indicating graphic to show a user that wireless power cannot be provided beyond an operating range from the wireless power providing device 801. The operating range may be predetermined or may be determined based on measurements of the environmental conditions, such as the magnetic permittivity of obstacles proximal to the wireless power providing device 801.

Thus, the wireless power providing device 801 may provide the augmented reality device with information relating to its operating range. The augmented reality device may then display a range indicating graphic. When virtual movement of the wireless power availability graphic 802 is provided for with its extending line graphic 904, the wireless power availability graphic 802 may be prevented from being virtually moved beyond the operating range. Thus, the range indicating graphic may comprise an animation of the wireless power availability graphic 802 where it no longer follows the movement of the user's hand. Alternatively, the range indicating graphic may appear as the changing of the colour of the wireless power availability graphic 802. Alternatively or in addition, an additional range limit graphic 1101 may be displayed, which may comprise a line or loop showing the maximum operating range.

In the above examples, the presentation of the identifying graphic 505, wireless power availability graphic 802, range indicating graphic and additional range limit graphic 1101 are provided for augmented reality display. However, the graphics may be displayed using a holographic display or a projector as will be discussed further below. It will be appreciated that the user manipulation of the graphics discussed in relation to augmented reality may be applied equally when the graphics are displayed holographically by using object tracking/identification algorithms, for example.

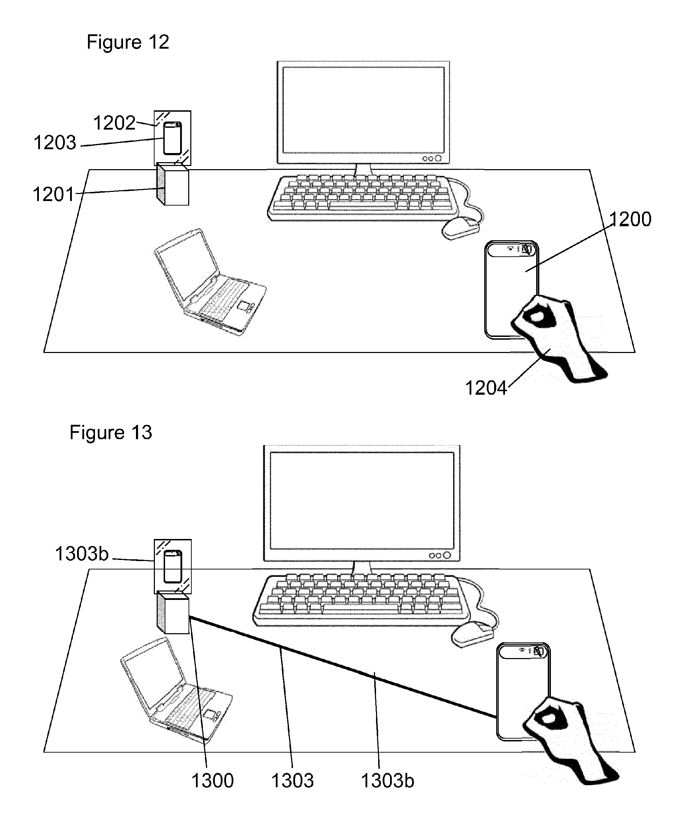

Figure 12 shows a scene of a user's desk similar to that shown in Figure 8, but it is not viewed through an augmented reality device. A portable electronic device 1200 is shown on the user's desk that has wireless power receiving capabilities. A directional wireless power providing device 1201 is also present on the desk. In this example the wireless power providing device 1201 includes a holographic display 1202. In this example, the wireless power providing device 1201 is wirelessly supplying power to the portable electronic device 1200 and the holographic display is displaying an identifying graphic 1203. The identifying graphic 1203, in this example, comprises an image of the portable electronic device 1200. The image is retrieved from a database of stock images of portable electronic devices based on the make and model of the portable electronic device, which may be obtained by communication between the portable electronic device 1200 and the wireless power providing device 1201. In other embodiments, the identifying graphic may be text, a live image obtained by a camera, an image provided by the portable electronic device or any other graphic that allows the user to identify the portable electronic device being wirelessly supplied with power.

The wireless power providing device 1201 or an apparatus associated therewith may include object recognition capabilities to identify user gestures which can be used to identify portable electronic devices to be wirelessly supplied with power. For example, a user may provide a gesture with their hand 1204 which provides an instruction to the wireless power providing device to initiate wireless supply of power. Further gestures may be used to interrupt the wireless supply of power. It will be appreciated that other ways of providing input to the wireless power providing device 1201 may be utilised such as by voice input or by user selection via a touch sensitive display. Alternatively, or in addition to, the augmented reality device (not shown) may be used to detect the user's gestures. For example, the near eye display may have an integrated camera that may recognize the user's gesture. When the wireless power providing device 1201 is viewed through the near eye display the user may provide a gesture with their hand to instruct the wireless power providing device to initiate wireless supply of power. It will be appreciated that the augmented reality (AR) device may comprise augmented reality glasses, near eye display, smart glasses, head mounted display and/or the like and may have a camera integrated or associated therewith.

Figure 13 shows a further example similar to Figure 12 and the same reference numerals have been used for like parts. In this example, the wireless power providing device 1201 includes a projector 1300 which is configured to project light onto surfaces. Thus, in this example, the identifying graphic 1303 comprises an image of the portable electronic device 1200 displayed on the holographic display in combination with a line projected by the projector 1300 across the desk that extends to the portable electronic device 1200. It will be appreciated that in other examples, the projector may be used to provide the identifying graphic without the holographic display 1202. In other examples the projector 1300 is optional.

Although the above description makes reference to powering the portable electronic device, the wireless power provided by the wireless power providing device may be used for charging a battery. A battery is one example of an energy storage device that is configured to provide electrical power to the other components of the portable electronic device to enable their functionality. In this respect, the other components may be considered to be the electronic display configured to display content stored on the portable electronic device (e.g. stored on the storage medium), and to a transceiver (not shown) configured to transmit and/or receive data to/from one or more other devices via a wired or wireless data connection.

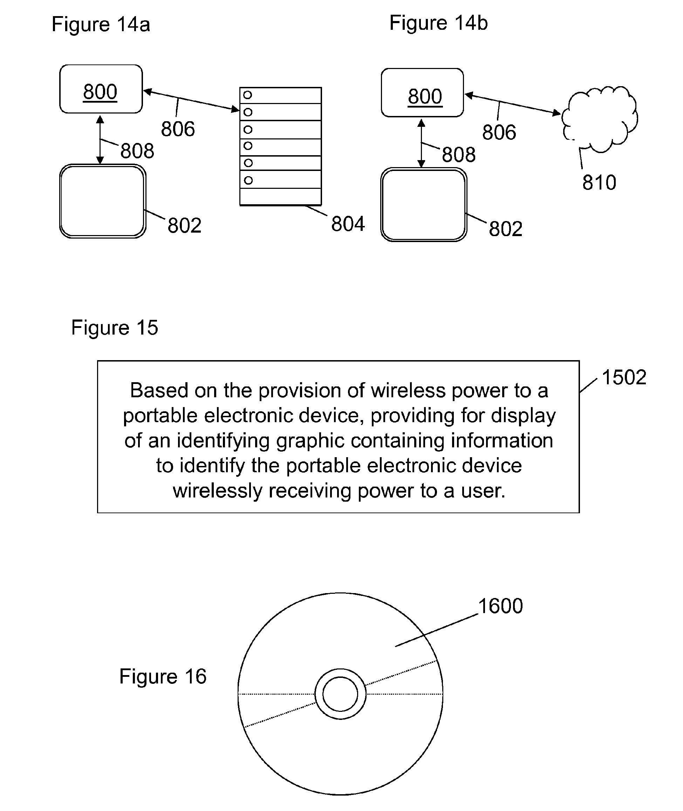

Figure 14a shows an example of an apparatus 1400 in communication with a remote server. Figure 14b shows an example of an apparatus 800 in communication with a "cloud" for cloud computing. In figures 14a and 14b, apparatus 800 (which may be apparatus 100, 200 or 300) is also in communication with a further apparatus 802. The apparatus 802 may be the portable electronic device and the apparatus 800 may be the wireless power providing device, for example. In other examples, the apparatus 800 and further apparatus 802 may both be comprised within a device such as a portable communications device or PDA. Communication may be via a communications unit, for example.

Figure 14a shows the remote computing element to be a remote server 804, with which the apparatus 800 may be in wired or wireless communication (e.g. via the internet, Bluetooth, NFC, a USB connection, or any other suitable connection as known to one skilled in the art). In figure 14b, the apparatus 800 is in communication with a remote cloud 810 (which may, for example, be the Internet, or a system of remote computers configured for cloud computing). For example, the apparatus providing for display of the identifying graphic may be located at a remote server 804 or cloud 810 and accessible by the first apparatus 800. For example, the determination of the location of portable electronic devices that may be wirelessly supplied with power may be determined remotely. Further object recognition and gesture recognition may be performed remotely. In other examples the second apparatus may also be in direct communication with the remote server 804 or cloud 810.

Figure 15 shows a flow diagram illustrating the steps of based on the provision of wireless power to a portable electronic device, providing 1502 for display of an identifying graphic containing information to identify the portable electronic device wirelessly receiving power to a user.

Figure 16 illustrates schematically a computer/processor readable medium 1600 providing a program according to an example. In this example, the computer/processor readable medium is a disc such as a digital versatile disc (DVD) or a compact disc (CD). In other examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping the device.

The apparatus and, in particular the portable electronic device, shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a household appliance, a smart TV, a server, or a module/circuitry for one or more of the same.

Any mentioned apparatus/device/server and/or other features of particular mentioned apparatus/device/server may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus/device/server may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising:
at least one processor; and
at least one memory including computer program code,
the at least one memory and the computer program code configured to, with the at least one processor, cause the apparatus to perform at least the following:
based on the provision of wireless power to a portable electronic device, provide for display of an identifying graphic distinct from a display screen of the portable electronic device, the identifying graphic containing information to identify the portable electronic device wirelessly receiving power to a user.

2. The apparatus of claim 1, wherein the identifying graphic is selected from at least;
i) an image of the portable electronic device;
ii) an image representative of a make/model of the portable electronic device;
iii) an image arranged to highlight the portable electronic device;
iv) a directional indicator arranged to point towards the portable electronic device; and
v) a line arranged to virtually connect a wireless power providing device and the portable electronic device to which it provides power as viewed by a user.

3. The apparatus of claim 1 or claim 2, wherein the identifying graphic is provided for display by a wireless power providing device configured to wirelessly provide the portable electronic device with power.

4. The apparatus of any preceding claim, wherein the apparatus provides for display of the identifying graphic only while power is supplied to said portable electronic device.

5. The apparatus of any preceding claim, wherein the identifying graphic is provided for holographic display.

6. The apparatus of any of claims 1 to 4, wherein the identifying graphic is provided for augmented reality display.

7. The apparatus of any preceding claim, wherein prior to the provision of wireless power to the portable electronic device, provide for the display of a wireless power availability graphic indicative of the availability of wirelessly transmitted power from a wireless power providing device.

8. The apparatus of claim 7, wherein based on virtual user actuation of the wireless power availability graphic to identify a portable electronic device, provide for initiation of the wireless supply of power to the portable electronic device.

9. The apparatus of claim 8, wherein the user actuation of the wireless power availability graphic comprises virtually dragging the wireless power availability graphic to, or within a predetermined distance of the portable electronic device.

10. The apparatus of claim 9, wherein based on the virtually dragging of the wireless power availability graphic by the user, provide for display of a line extending between the wireless power providing device and the wireless power availability graphic.

11. The apparatus of any preceding claim, wherein based on an indication of the range over which wireless power can be provided from a wireless power providing device, provide for the display of a range indicating graphic for showing a user the operating range of the wireless power providing device.

12. The apparatus of claim 11 when dependent on claim 7, wherein in response to virtual user manipulation of the wireless power availability graphic, which comprises virtually dragging the wireless power availability graphic away from the wireless power providing device beyond a predetermined distance, provide for display of an additional range limit graphic or modify the display of the wireless power availability graphic to indicate to a user that power cannot be provided beyond the predetermined distance.

13. The apparatus of claim 1, wherein the apparatus is one or more of: a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a household appliance, a smart TV, a server, or a module/circuitry for one or more of the same.

14. A method, the method comprising
based on the provision of wireless power to a portable electronic device, providing for display of an identifying graphic distinct from a display screen of the portable electronic device, the identifying graphic containing information to identify the portable electronic device wirelessly receiving power to a user.

15. A computer readable medium comprising computer program code stored thereon, the computer readable medium and computer program code being configured to, when run on at least one processor, perform at least the following:
based on the provision of wireless power to a portable electronic device, provide for display of an identifying graphic distinct from a display screen of the portable electronic device, the identifying graphic containing information to identify the portable electronic device wirelessly receiving power to a user.
